# EUROPÄISCHE PATENTSCHRIFT

(11) **EP 0 372 302 B1**
(45) Veröffentlichungstag und Bekanntmachung des Hinweises auf die Patenterteilung: **15.09.1993**
(21) Anmeldenummer: 89121642.6
(22) Anmeldetag: 23.11.1989
(51) Int. Cl.: G01B 5/00

(54) **Koordinatenmessgerät mit einem oder mehreren Führungselementen aus Aluminium**
Coordinates measuring machine with one or more aluminium guiding elements
Appareil de mesure de coordonnées avec un ou plusieurs éléments d'aluminium

(30) Priorität: 09.12.1988 DE 3841488
(43) Veröffentlichungstag der Anmeldung: 13.06.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Herzog, Klaus, D-7082 Oberkochen (DE); Seitz, Karl, D-7082 Oberkochen (DE); Schepperle, Karl, D-7082 Oberkochen (DE); Ähnelt, Peter, D-7082 Oberkochen (DE)

(56) Entgegenhaltungen:
- EP-A- 0 040 684
- EP-A- 0 143 079
- DE-A- 2 027 029
- FR-A- 2 510 773
- FR-A- 2 591 736
- US-A- 4 815 213
- PATENT ABSTRACTS OF JAPAN, Band 4, Nr. 51 (P-7)(533), 17. April 1980 ; & JP-A-5520443

## Beschreibung

Als Führungselemente für die beweglichen Meßschlitten eines Koordinatenmeßgerätes wurden bisher überwiegend Granitteile verwendet. Seit einiger Zeit werden jedoch auch Führungselemente aus Aluminium für diesen Zweck eingesetzt, da diese Bauteile den Vorteil einer guten Wärmeleitfähigkeit besitzen und sich dadurch innerhalb der Führung keine Temperaturgradienten ausbilden können. Temperaturgradienten führen dazu, daß sich die Führung unkontrolliert verformt.

Die zur Positionsmessung der Meßschlitten benötigten Maßstäbe sind in der Regel Glasmaßstäbe mit einer inkrementalen Teilung, die auf den Führungselementen befestigt werden. Um den Einfluß der thermischen Längenausdehnung auf das Meßergebnis zu vermindern ist es außerdem bekannt, die Temperatur der Glasmaßstäbe durch angesetzte Temperatursensoren zu erfassen und zusammen mit der am Werkstück gemessenen Temperatur bei der Bildung des Meßergebnisses zu berücksichtigen. Ein entsprechendes Korrekturverfahren ist z.B. in der DE-A-36 20 118 beschrieben.

Besondere Schwierigkeiten bereitet die Konstruktion der Fassung für den Maßstab. Die Fassung muß sicherstellen, daß bei Temperaturschwankungen während des Betriebs des Koordinatenmeßgerätes in einem Temperaturbereich zwischen ca. 5^{o} C bis 35^{o} C aufgrund der unterschiedlichen thermischen Längenausdehnung von Führungselement und Maßstab keine Zwangskräfte bzw. Verspannungen auftreten. Der Maßstab muß vielmehr zwangsfrei gehalten werden, damit er sich nicht verformt. Dies ist insbesondere dann wichtig, wenn neben der eigentlichen Maßstabsteilung auf dem Maßstab noch ein Linearitätsnormal in Form einer Teilung quer zur Führungsrichtung aufgebracht ist, wie sie beispielsweise in der DE-A-35 42 514 beschrieben ist.

Ein weiteres Problem, welches eine exakte Kompensation der Temperaturabweichung verhindert, ist darin zu sehen, daß sich aufgrund der schlechten Wärmeleitfähigkeit von Glas im Glasmaßstab selber Temperaturgradienten bis zu mehreren ^{o}C aufbauen können, so daß sich die Temperatur des Maßstabes mit einem oder wenigen Meßstellen allein nicht völlig exakt erfassen läßt.

Es sind auch Anbaumeßsysteme bekannt, die in einem Gehäuse aus Aluminium einen Glasmaßstab oder einen Maßstab in Form eines Stahlbandes enthalten, dessen Teilung photoelektrisch abgetastet wird. Für solche Anbaumeßsysteme treten bei unterschiedlichen thermischen Längenausdehnungen von Maßstab und Führung ganz ähnliche Probleme auf. Zur Abhilfe ist teilweise vorgeschlagen worden, den Glasmaßstab im gestauchten Zustand fest mit dem Aluminium oder Stahlgehäuse zu verbinden, so daß er aufgrund seiner inneren Druckspannung der Längenausdehnung des Gehäuses folgen kann. Ein entsprechendes Meßsystem ist in der EP-A-0 266 498 beschrieben. Dies ist jedoch keine dauerhafte Lösung, da der Werkstoff Glas zum Fließen neigt und sich die Druckspannungen dadurch mit der Zeit abbauen bzw. sich der Maßstab deformiert.

Der Erfindung liegt die Aufgabe zugrunde, insbesondere für Koordinatenmeßgeräte mit Führungselementen aus Aluminium einen Maßstab zu schaffen, der problemlos befestigt werden kann und eine einwandfreie Korrektur des Temperaturfehlers bei der Längenmessung gestattet.

Diese Aufgabe wird gemäß den im Kennzeichen des Anspruchs 1 angegebenen Maßnahmen dadurch gelöst, daß der Maßstab ebenfalls aus Aluminium besteht.

Da der Maßstab und sein Träger, nämlich das Führungsteil, auf dem er befestigt werden soll, aus dem gleichen Material bestehen, tritt keine Verspannung infolge thermischer Effekte zwischen Maßstab und Führung auf. Die Fassung des Maßstabes kann deshalb sehr einfach gehalten werden. Beispielsweise kann der Maßstab einfach auf die Führung aufgeschraubt werden.

Außerdem können sich dann im Maßstab selbst aufgrund der guten Wärmeleitfähigkeit von Aluminium keine Temperaturgradienten ausbilden, so daß die Temperatur des Maßstabes mit einem bzw. wenigen Temperatursensoren genau erfaßt und bei der Bildung des Längenmeßwertes berücksichtigt werden kann.

Es ist sogar möglich, die Teilung für den Maßstab direkt auf die Oberfläche des Führungselementes aufzubringen. Dies ist zumindest für Führungselemente mit kleineren Abmessungen eine technisch besonders optimale Lösung, da der Maßstab dann dauerhaft und unverrückbar mit dem Führungselement verbunden ist.

Als geeignete Führungselemente kommen hierfür beispielsweise der Meßarm des Koordinatenmeßgerätes in Frage, an dem der Tastkopf befestigt ist, oder die Führungen innerhalb des Tastkopfes für dessen bewegliche, den Taststift tragende Teile.

Der Sensor zur Messung der Temperatur des Maßstabes ist zweckmäßig auf den Maßstab bzw. das Führungselement aufgesetzt und kann auch in die Oberfläche des Maßstabs bereits bei der Maßstabsherstellung integriert werden, wie dies in der früheren Anmeldung der Anmelderin mit dem Aktenzeichen DE-A-3 823 922 beschrieben ist.

Der Maßstab selbst kann eine inkrementale Teilung in Form eines Reflexionsgitters tragen. Das Gitter ist dann zweckmäßig ein Phasengitter, dessen Stufen z.B ebenfalls aus Aluminium bestehen. Ein solches Reflexionsphasengitter kann beispielsweise dadurch erzeugt werden, daß die Maßstabsteilung auf photolithographischem Wege auf die Oberfläche des Führungselementes aufgebracht und anschließend mit Aluminium bedampft wird.

Es sind zwar Skalen für Meßgeräte und auch Lineale aus Aluminium an sich bekannt. Derartige Skalen und Lineale eignen sich jedoch nicht als Maßstab für automatische Längenmessungen im Mikrometerbereich.

Weitere Vorteile der Erfindung ergeben sich aus der nachfolgenden Beschreibung von Ausführungsbeispielen anhand der Figuren 1-3 der beigefügten Zeichnungen.
- Figur 1: Ist ein perspektivische Prinzipskizze, in der die als Führung für den Querschlitten dienende Traverse eines Koordinatenmeßgerätes in Portalbauweise dargestellt ist;
- Figur 2: ist eine perspektivische Prinzipskizze der im Querschlitten (7) aus Fig. 1 vertikal geführten Pinole;
- Figur 3: ist eine Schnittzeichnung der Teilung auf der Pinole (8) in Figur 2 in stark vergrößertem Maßstabe.

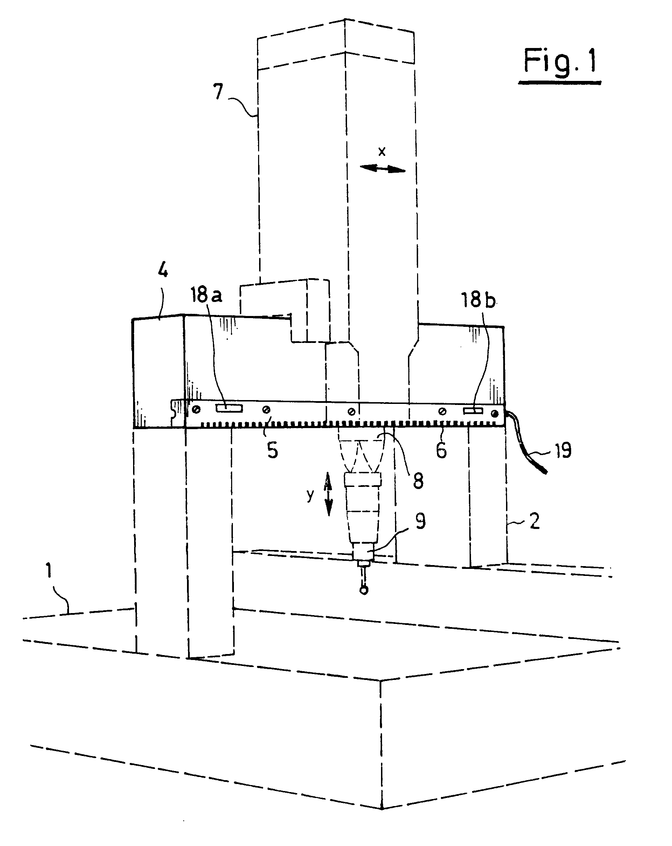

Der in Figur 1 dargestellte Querträger (4) ist beidseitig mit den beiden Säulen (2) und (3) verbunden, die auf dem Meßtisch (1) des Koordinatenmeßgerätes längsverschieblich gelagert sind, und bildet mit diesen zusammen das Portal des Koordinatenmeßgerätes.

Der Querträger (4) besteht aus einem Aluminiumprofil, das an seinen Außenseiten feinstbearbeitet ist. Er dient dem über nicht dargestellte Luftlager auf ihm gleitenden Querschlitten (7) als Führung. Im Querschlitten (7) ist, wie bei derartigen Koordinatenmeßgeräten üblich, die vertikal verschiebbare Pinole (8) gelagert, die an ihrer Unterseite den zur Antastung eines Werkstücks dienenden Tastkopf (9) trägt. Der Querschlitten (7) und die Pinole (8) bestehen ebenfalls aus Aluminium.

Dieser Tastkopf kann in seinem Innern bewegliche Teile sowie Führungselemente aus Aluminium zur Führung der beweglichen Teile enthalten, wobei die Führungen eine Maßstabsteilung tragen können, die direkt auf die Oberfläche des Führungselementes aufgebracht bzw. eingearbeitet ist.

Für die Messung der Position des Querschlittens (7) ist auf das Aluminiumprofil des Querträgers (4) eine Leiste (5) aufgeschraubt, die die Maßstabsteilung (6) trägt. Die Leiste (5) mit der Teilung (6) stellt den x-Maßstab des Koordinatemeßgerätes dar. An beiden Enden des Maßstabes auf diesen aufgesetzt sind zwei Temperatursensoren (18a) und (18b), deren Anschlußkabel mit (19) bezeichnet ist. Diese Sensoren dienen dazu, die Temperatur des Maßstabs (5) zu erfassen, so daß der Einfluß unterschiedlicher Temperaturen zwischen dem zu vermessendem Werkstück und dem Maßstab (5) wie in der DE-A-36 20 118 beschrieben korrigiert werden kann.

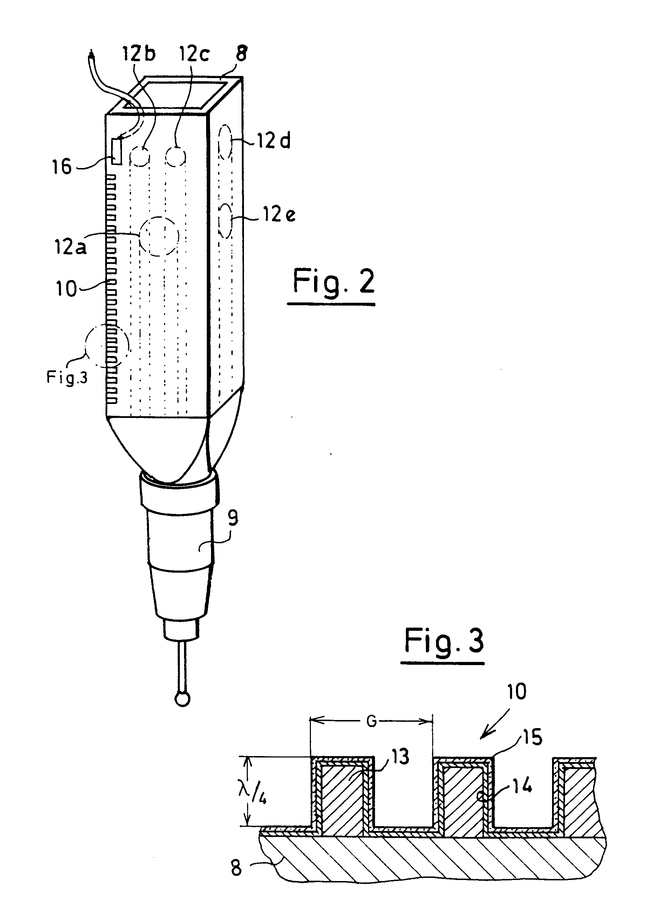

Die Pinole (8) ist in Figur 2 dargestellt. Sie besteht aus einem Aluminiumrohr mit rechteckigem Querschnitt, wobei die Außenseiten die Führungsflächen der Pinole darstellen, mit denen sie zwischen Luftlagern im Querschlitten (7) (Figur 1) gleitet. Die Stellen, auf denen sich die nicht näher dargestellten Luftlager im Querschlitten (7) auf der Pinole (8) abstützen, sind in Figur 2 mit (12a-e) bezeichnet.

Die Pinole (8) trägt auf einer Seite eine in Führungsrichtung verlaufende Maßstabsteilung (10), die direkt auf die Oberfläche des Aluminiumprofils aufgebracht ist. Die Maßstabsteilung (10) ist ebenso wie die Teilung (6) auf dem Maßstab des Querträgers (4) eine inkrementale Gitterteilung nach Art eines reflektierenden Auflicht-Phasengitters. Der Aufbau dieser Gitterteilung geht aus der stark vergrößerten Schnittzeichnung durch die Teilung nach Figur 3 hervor. Das Gitter besitzt ein rechteckiges Stufenprofil, wobei die Substanz (13) der Stufen aus einem leicht verdampfbaren und gut haftendem Material besteht. Über die Substanz (13) ist eine Reflexionsschicht (14) aus Aluminium gelegt. Darüber wiederum ist eine zweite Schicht, eine Schutzschicht (15) gelegt, die aus Magnesiumfluorid besteht.

Auch die Pinole (8) ist mit einem Temperatursensor (16) im Bereich der Maßstabsteilung (10) versehen.

Zur Herstellung dieses Maßstabsgitters kann wie folgt vorgegangen werden:
Zuerst wird die Oberfläche der Pinole (8) mit der für die Qualität der Führung notwendigen Präzision feinst bearbeitet. Anschließend wird die Oberfläche mit Photolack beschichtet. Diese Photolacksicht wird dann im Bereich der Gitterteilung mit der Gitterstruktur belichtet.

Anschließend wird die Photolacksicht entwickelt, wobei die Lackschicht an den belichteten Stellen entfernt wird. Nun wird die Oberfläche in der für das Phasengitter erforderlichen Stufenhöhe von beispielsweise λ/4 mit der Substanz (13) bedampft. Bei dieser Substanz (13) kann es sich beispielsweise selbst um Aluminium handeln oder es kann ein anderes geeignetes Material wie z.B. Yttriumfluorid verwendet werden. Nach Abschluß des Bedampfungsvorganges wird der Photolack abgelaugt, so daß dann nur noch die rechteckförmigen Stufen der Substanz (13) im Bereich der Teilung verbleiben. Anschließend wird eine spiegelnde Aluminiumschicht auf den gesamten Teilungsbereich aufgedampft. Diese Spiegelsicht (14) wird noch mit einer Schutzschicht (15) aus MgF₂ abgedeckt.

Das beschriebene Verfahren macht von an sich bekannten photolithographischen Herstelltechniken Gebrauch, so daß auf eine genauere Beschreibung an dieser Stelle verzichtet werden kann. Es soll jedoch noch erwähnt werden, daß es auch möglich ist, die Teilung der erforderlichen Stufenhöhe in die Aluminiumoberfläche einzuätzen, anstatt die Stufen aufzutragen. Im Ergebnis jedenfalls erhält man ein Führungselement mit direkt in die Oberfläche integrierter Maßstabsteilung, die dauerhaft und unverrückbar fest mit dem Führungselement (8) verbunden ist.

In den Figuren wurde ein Koordinatenmeßgerät mit Führungen aus Aluminium beschrieben. Es ist jedoch klar, daß die Erfindung in gleicher Weise auch für andere Maschinen, beispielsweise Werkzeugmaschinen Anwendung finden kann.

## Patentansprüche

1. Koordinatenmeßgerät mit einem zur Antastung eines Werkstücks dienenden Tastkopf (9) und einem oder mehreren Führungselement(en) (8) aus Aluminium, das einen Maßstab trägt, dadurch gekennzeichnet, daß der Maßstab (5;10) ebenfalls aus Aluminium besteht.

2. Koordinatenmeßgerät nach Anspruch 1, dadurch gekennzeichnet, daß der Maßstab (5) ein separates, an der Führung (4) befestigtes Teil ist.

3. Koordinatenmeßgerät nach Anspruch 1, dadurch gekennzeichnet, daß die Teilung (10) für den Maßstab direkt auf die Oberfläche des Führungselementes (8) aufgebracht bzw. eingearbeitet ist.

4. Koordinatenmeßgerät nach Anspruch 3, dadurch gekennzeichnet, daß das Führungselement der den Tastkopf (9) tragende Meßarm (8) des Koordinatenmeßgerätes ist.

5. Koordinatenmeßgerät nach Anspruch 3, dadurch gekennzeichnet, daß die mit der Maßstabsteilung versehenen Führungselemente die Führungen der beweglichen Teile im Inneren des Tastkopfes des Koordinantenmeßgerätes sind.

6. Koordinatenmeßgerät nach Anspruch 1, dadurch gekennzeichnet, daß auf den Maßstab (5) bzw. das Führungselement (8) ein Temperatursensor (16;18a,b) aufgesetzt bzw. in die Oberfläche des Maßstabs integriert ist.

7. Koordinatenmeßgerät nach Anspruch 1, dadurch gekennzeichnet, daß der Maßstab (10) ein inkrementaler Maßstab in Form eines Reflexionsgitters ist.

8. Koordinatenmeßgerät nach Anspruch 7, dadurch gekennzeichnet, daß das Gitter ein Phasengitter ist, dessen Stufen (13,14) ebenfalls aus Aluminium bestehen.

9. Koordinatenmeßgerät nach Anspruch 1, dadurch gekennzeichnet, daß die Oberfläche des Maßstabs mit einer Schutzschicht (15) versehen ist.

10. Verfahren zur Herstellung von Maßstäben auf Führungselementen aus Aluminium bei einer Vorrichtung nach Anspruch 3, dadurch gekennzeichnet, daß die Maßstabsteilung (10) als reflektierendes Phasengitter auf die Oberfläche des Führungselementes (8) aufgebracht wird, indem die Struktur der Teilung auf photolithographischem Wege erzeugt und anschließend eine Spiegelschicht (14) auf den gesamten Teilungsbereich aufgedampft wird.

## Claims

1. A coordinate measuring apparatus comprising, a probe unit (9) and one or more guide members (8) made of aluminum, which carry a scale, characterized in that the scale (5;10) is also made of aluminum.

2. The coordinate measuring apparatus of claim 1, characterized by the fact that said scale (5) is a separate part attached to said guide member (4).

3. The coordinate measuring apparatus of claim 1, characterized by the fact that the scale divisions (10) of said scale are applied directly to or worked into the surface of the guide member (8).

4. The coordinate measuring apparatus of claim 3, characterized by the fact that said guide member is the measuring arm (8) of said coordinate measuring apparatus carrying the probe unit (9).

5. The coordinate measuring apparatus of claim 3, characterized by the fact that the guide members comprising the scale divisions are the guides for the movable parts in the interior of the probe unit of the coordinate measuring instrument.

6. The coordinate measuring apparatus of claim 1, characterized by the fact that a temperature sensor (16; 18a, 6) is disposed on said scale (5) or on said guide member (8), or integrated into the surface of said scale.

7. The coordinate measuring apparatus of claim 1, characterized by the fact that said scale (10) is an incremental scale in the form of a reflection grating.

8. The coordinate measuring apparatus of claim 7, characterized by the fact that said grating is a phase grating having a plurality of steps (13, 14) also made of aluminum.

9. The coordinate measuring apparatus of claim 1, characterized by the fact that the surface of said scale comprises a protective film (15).

10. A method of producing scales on guide members made of aluminum in a device according to claim 3, characterized by the fact that the scale division (10) in the form of a reflecting phase grating is applied to the surface of the guide member (8) by generating the scale division with photolithographic means and by deposing subsequently a mirror layer onto the area covered by the scale division by vaporization.

## Revendications

1. Appareil de mesure des coordonnées comprenant une tête de palpeur (9) servent à palper une pièce, et un ou plusieurs élément(s) de guidage (8) en aluminium, qui porte(nt) une règle graduée, caractérisé en ce que la règle graduée (5 ; 10) est elle aussi faite d'aluminium.

2. Appareil de mesure des coordonnées selon la revendication 1, caractérisé en ce que la règle graduée (5) est une pièce séparée, fixée au guide (4).

3. Appareil de mesure des coordonnées selon la revendication 1, caractérisé en ce que la division (10) de la règle graduée est directement déposée ou gravée sur la surface de l'élément de guidage (8).

4. Appareil de mesure des coordonnées selon la revendication 3, caractérisé en ce que l'élément de guidage est le bras de mesure (8) de l'appareil de mesure des coordonnées qui porte la tête de palpeur (9).

5. Appareil de mesure des coordonnées selon la revendication 3, caractérisé en ce que les éléments de guidage munis de la division de règle graduée sont les guides des parties mobiles situées à l'intérieur de la tête de palpeur de l'appareil de mesure des coordonnées.

6. Appareil de mesure des coordonnées selon la revendication 1, caractérisé en ce qu'un capteur de température (16 ; 18a, b) est appliqué sur la règle graduée (5) ou sur l'élément de guidage (8), ou est intégré dans la surface de la règle graduée.

7. Appareil de mesure des coordonnées selon la revendication 1, caractérisé en ce que la règle graduée (10) est une règle graduée incrémentale présentant la forme d'une grille à réflexion.

8. Appareil de mesure de coordonnée selon la revendication 7, caractérisé en ce que la grille est une grille de phase dont les échelons (13, 14) sont eux aussi faits d'aluminium.

9. Appareil de mesure des coordonnées selon la revendication 1, caractérisé en ce que la surface de la règle graduée est munie d'une couche protectrice (15).

10. Procédé de production de règles graduées sur des éléments de guidage en aluminium, pour un dispositif selon la revendication 3, caractérisé en ce que la division (10) de la règle graduée est déposée sur la surface de l'élément de guidage (8) sous la forme d'une grille de phase réfléchissante, la structure de la division étant produite par voie photolithographique, et une couche réfléchissante (14) étant ensuite déposée sur toute la zone de la division.
